# EUROPEAN PATENT APPLICATION

(11) **EP 4 496 024 A2**
(43) Date of publication of application: **22.01.2025**
(21) Application number: 24187812.3
(22) Date of filing: 10.07.2024
(51) Int. Cl.: H01M 4/13, H01M 4/139, H01M 50/533, H01M 50/536

(54) **ELECTRODE PLATE ASSEMBLY, ELECTRODE ASSEMBLY, ELECTROCHEMICAL DEVICE, ELECTRICAL DEVICE, AND ELECTRODE PLATE ASSEMBLY MANUFACTURING METHOD**

(30) Priority: 10.07.2023 CN 202310835161
(71) Applicant: Ningde Amperex Technology Limited, Ningde City, Fujian Province 352100 (CN)
(72) Inventor: HUANG, Chu, Ningde City, Fujian Province, People s Republic of China, 352100 (CN); LIN, Sen, Ningde City, Fujian Province, People s Republic of China, 352100 (CN); MA, Wu, Ningde City, Fujian Province, People s Republic of China, 352100 (CN)
(74) Representative: Icosa

(57) **Abstract**

This application provides an electrode plate assembly (10), an electrode assembly, an electrochemical device, an electrical device, and an electrode plate assembly (10) manufacturing method. The electrode plate assembly (10) includes an electrode plate(100) and a tab (200). A first through-hole (140) is created on the electrode plate. The first through-hole (140) penetrates the electrode plate along a thickness direction of the electrode plate. The tab (200) includes a main body (210), a connecting portion (220), and a constraining portion (230). Along the thickness direction, the main body (210) and the constraining portion (230) are located on two sides of the electrode plate respectively. The connecting portion (220) runs through the first through-hole (140) and connects the main body (210) and the constraining portion (230). The electrode plate includes a current collector (110) and a first active material layer (120). Along the thickness direction, the first active material layer (120) is disposed on one side of the current collector (110). The current collector (110) and the first active material layer (120) are located between the main body (210) and the constraining portion (230). The tab (200) is electrically connected to the current collector (110). The tab (200) is connected to the electrode plate by coordination between the main body (210), the connecting portion (220), and the constraining portion (230), thereby avoiding the need to weld the tab (200) to the electrode plate, and alleviating the high cost caused by the welding. The manufacturing process is free from a need to remove the first active material layer (120) between the main body (210) and the current collector (110), or between the constraining portion (230) and the current collector (110), thereby reducing production cost and improving cycle performance of batteries.

## Description

### TECHNICAL FIELD

This application relates to the field of batteries, and in particular, to an electrode plate assembly, an electrode assembly, an electrochemical device, an electrical device, and an electrode plate assembly manufacturing method.

### BACKGROUND

With the development of new energy technology, electrochemical devices are widely used in the fields such as portable electronic devices, electric transportation, electric tools, unmanned aerial vehicles, and energy storage devices by virtue of a high energy density and high degree of customization. The electrochemical devices include an electrode assembly. The electrode assembly is primarily formed by winding or stacking a positive electrode plate and negative electrode plate assembly. The manufacturing cost of the electrode plate assembly is of great significance to the cost of the electrochemical device. However, currently, the manufacturing cost of the electrode plate assembly is relatively high.

### SUMMARY

An objective of some embodiments of this application is to provide an electrode plate assembly, an electrode assembly, an electrochemical device, an electrical device, and an electrode plate assembly manufacturing method to alleviate the problem of a relatively high manufacturing cost of the electrode plate assembly in the related art.

According to a first aspect, an embodiment of this application provides an electrode plate assembly. The electrode plate assembly includes an electrode plate and a tab. A first through-hole is created on the electrode plate. The first through-hole penetrates the electrode plate along a thickness direction of the electrode plate. The tab includes a main body, a connecting portion, and a constraining portion. Along the thickness direction, the main body and the constraining portion are located on two sides of the electrode plate respectively. The connecting portion runs through the first through-hole and connects the main body and the constraining portion. The electrode plate includes a current collector and a first active material layer. Along the thickness direction, the first active material layer is disposed on one side of the current collector. The current collector and the first active material layer are located between the main body and the constraining portion. The tab is electrically connected to the current collector.

In the above technical solution, the main body of the tab can abut against the electrode plate, thereby restricting the connecting portion from being detached from the first through-hole in a direction directed from the main body to the constraining portion. The constraining portion can abut against the electrode plate, thereby restricting the connecting portion from being detached from the first through-hole in a direction directed from the constraining portion to the main body. In this way, the tab can be stably connected to the electrode plate, without a need to weld the tab to the electrode plate, thereby avoiding welding defects and alleviating the problem of the high cost caused by the welding. Along the thickness direction, the first active material layer is disposed between the main body and the current collector, or the first active material layer is disposed between the constraining portion and the current collector. In this way, during manufacturing of an electrode plate, the electrode plate can be coated continuously, without a need to remove the first active material layer between the main body and the current collector or between the constraining portion and the current collector, thereby reducing production steps, reducing production cost, and improving cycle performance of batteries.

In an optional technical solution put forward in an embodiment of this application, the electrode plate further includes a second active material layer. Along the thickness direction, the second active material layer is disposed on one side of the current collector, the side being oriented away from the first active material layer. The current collector, the first active material layer, and the second active material layer are all located between the main body and the constraining portion. Along the thickness direction, the main body and the constraining portion are in contact with the first active material layer and the second active material layer, respectively.

In the above technical solution, along the thickness direction, the first active material layer is disposed between the main body and the current collector, and the second active material layer is disposed between the constraining portion and the current collector. During manufacturing of an electrode plate, the electrode plate can be coated continuously, without a need to remove the first active material layer between the main body and the current collector or the second active material layer between the constraining portion and the current collector, thereby reducing production steps, and reducing production cost. In addition, with the main body being in contact with the first active material layer, the main body can prevent the electrode plate from moving in a direction directed from the main body to the constraining portion. With the constraining portion being in contact with the second active material layer, the constraining portion can prevent the electrode plate from moving in a direction directed from the constraining portion to the main body. The coordination between the main body and the constraining portion can prevent the electrode plate from wobbling in the thickness direction, so that the electrochemical device prepared from the electrode plate assembly is more stable and reliable.

In an optional technical solution put forward in an embodiment of this application, along the thickness direction, one of the main body or the constraining portion presses against the current collector, and the other of the main body or the constraining portion presses against the first active material layer.

In the above technical solution, the main body presses against one of the current collector or the first active material layer, thereby preventing the electrode plate from moving in a direction directed from the main body to the constraining portion. The constraining portion presses against the other of the current collector or the first active material layer, thereby preventing the electrode plate from moving in a direction directed from the constraining portion to the main body. The coordination between the main body and the constraining portion can prevent the electrode plate from wobbling in the thickness direction, so that the electrochemical device prepared from the electrode plate assembly is more stable and reliable.

In an optional technical solution put forward in an embodiment of this application, the electrode plate further includes a second active material layer. Along the thickness direction, the second active material layer is disposed on one side of the current collector, the side being oriented away from the first active material layer. The second active material layer includes a hollowed region exposing the current collector. One of the main body or the constraining portion presses against the first active material layer, and the other of the main body or the constraining portion is located in the hollowed region and presses against the current collector.

In the above technical solution, by disposing the other of the main body or the constraining portion in the hollowed region, the active material layer is absent between the other of the main body or the constraining portion and the current collector along the thickness direction. Along a direction directed from the current collector to the second active material layer, the other of the main body or the constraining portion may be disposed without protruding from the second active material layer, or the other of the main body or the constraining portion may protrude from the second active material layer by just a small margin of height, thereby reducing the dimension of the electrode plate assembly in the thickness direction, and increasing the energy density of the electrochemical device prepared from the electrode plate assembly.

In an optional technical solution put forward in an embodiment of this application, a conductive layer is disposed between the connecting portion and a hole wall of the first through-hole.

In the above technical solution, with the conductive layer disposed between the connecting portion and the hole wall of the first through-hole, the flow capacity at the junction between the connecting portion and the current collector is increased.

In an optional technical solution put forward in an embodiment of this application, the conductive layer is bonded to the connecting portion and the hole wall.

In the above technical solution, the conductive layer is sticky. The connecting portion is bonded to the hole wall by the conductive layer. On the one hand, this reduces the risk that the connecting portion is detached from the hole wall, and makes the tab not prone to wobble, thereby further improving the stability of connection between the tab and the electrode plate. On the other hand, the connecting portion is not prone to upwarp, so that the current can flow to the connecting portion through the current collector and the conductive layer, thereby ensuring a sufficient flow capacity.

In an optional technical solution put forward in an embodiment of this application, the constraining portion is a flange structure disposed at one end of the connecting portion, the end being away from the main body.

In the above technical solution, the constraining portion is a flange structure. During manufacturing, the tab can be connected to the electrode plate by riveting, thereby being simple, convenient, and cost-effective.

In an optional technical solution put forward in an embodiment of this application, a second through-hole is created on the main body. The second through-hole penetrates the connecting portion along the thickness direction.

In the above technical solution, during manufacturing, a first through-hole may be created on the electrode plate first, and then the tab is placed at the first through-hole to cover the first through-hole. At a position corresponding to the first through-hole, the tab is punched by using a punching pin, so as to form a second through-hole. A part of the punched material forms a connecting portion, and another part of the punched material is flanged to form a constraining portion.

In an optional technical solution put forward in an embodiment of this application, a shape of the connecting portion matches a shape of the first through-hole. An outer peripheral surface of the connecting portion snugly fits a hole wall face of the first through-hole.

In the above technical solution, by matching the shape of the connecting portion to the shape of the first through-hole and making the outer peripheral surface of the connecting portion snugly fit the hole wall face of the first through-hole, the technical solution can restrict the connecting portion from moving along a direction perpendicular to the thickness direction within the first through-hole on the one hand. In this way, the tab is constrained from moving relative to the electrode plate along the direction perpendicular to the thickness direction, and the tab is not prone to wobble, thereby further improving the stability of connection between the tab and the electrode plate. On the other hand, the current can flow from the current collector to the connecting portion, thereby increasing the flow capacity.

In an optional technical solution put forward in an embodiment of this application, the first through-hole is a square hole.

In the above technical solution, the first through-hole is set to be a square hole. On the one hand, the square hole is large in area, thereby increasing the contact area between the tab and the electrode plate, and increasing the flow capacity. On the other hand, interference is not prone to occur when a constraining portion is formed by flanging. In an optional technical solution put forward in an embodiment of this application, a side length of the first through-hole is L, satisfying: 0.8 mm < L ≤ 2 mm.

In the above technical solution, by limiting the side length of the first through-hole to a range of 0.8 mm to 2 mm, the size of the first through-hole is moderate, thereby not only ensuring stability of connection between the tab and the electrode plate, but also increasing the number of first through-holes that can be created. In this way, the tab is connected to the electrode plate at the position of each first through-hole, thereby improving the stability of connection between the tab and the electrode plate. When L is less than 0.8 mm, the first through-hole is overly small, just a small part of the connecting portion can be accommodated in the first through-hole, and the connecting portion is prone to break, thereby resulting in low stability of connection between the tab and the electrode plate. When L is greater than 2 mm, the first through-hole is overly large, and just a small number of first through-holes can be created, thereby also impairing the stability of connection between the tab and the electrode plate.

In an optional technical solution put forward in an embodiment of this application, a plurality of the connecting portions are disposed on the main body. The constraining portions and the first through-holes correspond to the connecting portions one to one. In the above technical solution, a plurality of connecting portions are disposed.

Corresponding to each connecting portion, one constraining portion and one first through-hole are disposed. On the one hand, this can improve the stability of connection between the tab and the electrode plate. On the other hand, this increases the contact area between the current collector and the tab, thereby increasing the flow capacity. According to a second aspect, an embodiment of this application further provides an electrode assembly. The electrode assembly includes a separator, a first electrode plate assembly, and a second electrode plate assembly. The second electrode plate assembly is of an opposite polarity to the first electrode plate assembly. At least one of the first electrode plate assembly or the second electrode plate assembly is the electrode plate assembly disclosed above. The first electrode plate assembly, the separator, and the second electrode plate assembly are wound or stacked to form the electrode assembly. In an optional technical solution put forward in an embodiment of this application, the first electrode plate assembly includes N layers of first electrode plates, and tabs of the first electrode plate assembly are disposed on the first electrode plates on a 2^{nd} layer to an (N-1)^{th} layer respectively, where N is an integer and N ≥ 2; and/or, the second electrode plate assembly includes P layers of second electrode plates, the second electrode plates are of an opposite polarity to the first electrode plates, and tabs of the second electrode plate assembly are disposed on the second electrode plates on a 2^{nd} layer to an (P-1)^{th} layer respectively, where P is an integer and P ≥ 2.

In the above technical solution, the tabs of the first electrode plate assembly are not disposed on the innermost first electrode plate or the outermost first electrode plate, thereby shortening the transport path of electrons and reducing the internal resistance of the battery cell. Similarly, the tabs of the second electrode plate assembly are not disposed on the innermost second electrode plate or the outermost second electrode plate, thereby shortening the transport path of electrons and reducing the internal resistance of the battery cell.

According to a third aspect, an embodiment of this application further provides an electrochemical device. The electrochemical device includes a housing and the foregoing electrode assembly. The electrode assembly is accommodated in the housing. According to a fourth aspect, an embodiment of this application further provides an electrical device. The electrical device includes the foregoing electrochemical device. According to a fifth aspect, an embodiment of this application further provides an electrode plate assembly manufacturing method. The manufacturing method includes: applying a first active material layer onto a current collector continuously to form an electrode plate web; cutting the electrode plate web to obtain electrode plates of an electrode plate assembly; forming a first through-hole on each of the electrode plates, where the first through-hole penetrates the electrode plate along a thickness direction of the electrode plate; stacking a tab and the electrode plate, and stamping the tab to form a main body and a riveting portion of the tab, where the riveting portion extends into the first through-hole; and flanging one end, away from the main body, of the riveting portion, so that the riveting portion forms a connecting portion and a constraining portion. Along the thickness direction, the connecting portion runs through the first through-hole and connects the main body and the constraining portion. The current collector and the first active material layer are located between the main body and the constraining portion.

In the above technical solution, when the electrode plate assembly is manufactured by this manufacturing method, no welding is required, thereby alleviating the problem of high cost caused by the welding. In addition, during manufacturing of an electrode plate, the electrode plate can be coated continuously, without a need to remove the first active material layer between the main body and the current collector or between the constraining portion and the current collector, thereby reducing production steps, reducing production cost, and improving cycle performance of batteries.

### BRIEF DESCRIPTION OF DRAWINGS

To describe technical solutions in embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.
FIG. 1 is a schematic top view of an electrode plate assembly according to some embodiments of this application;
FIG. 2 is a cross-sectional view of sectioning along an A-Aline shown in FIG. 1;
FIG. 3 is a schematic top view of an electrode plate assembly according to some other embodiments of this application;
FIG. 4 is a cross-sectional view of sectioning along a B-B line shown in FIG. 3;
FIG. 5 is a schematic top view of an electrode plate assembly according to still some other embodiments of this application;
FIG. 6 is a cross-sectional view of sectioning along a C-C line shown in FIG. 5;
FIG. 7 is a schematic top view of an electrode plate assembly according to yet some other embodiments of this application;
FIG. 8 is a cross-sectional view of sectioning along an E-E line shown in FIG. 7;
FIG. 9 is a schematic top view of an electrode plate assembly according to still some other embodiments of this application;
FIG. 10 is a cross-sectional view of sectioning along an F-F line shown in FIG. 9;
FIG. 11 is a schematic top view of an electrode plate assembly according to yet some other embodiments of this application;
FIG. 12 is a cross-sectional view of sectioning along a G-G line shown in FIG. 11;
FIG. 13 is a schematic block diagram of an electrode plate assembly manufacturing method according to some embodiments of this application;
FIG. 14 is a schematic structural diagram of an electrode plate web according to some embodiments of this application;
FIG. 15 is a schematic top view of an electrode plate according to some embodiments of this application;
FIG. 16 is a cross-sectional view of sectioning along an H-H line shown in FIG. 15;
FIG. 17 is a schematic top view of an electrode plate on which a first through-hole is formed according to some embodiments of this application;
FIG. 18 is a cross-sectional view of sectioning along an I-I line shown in FIG. 17;
FIG. 19 is a schematic top view of a riveting portion formed by stamping a tab according to some embodiments of this application; and
FIG. 20 is a cross-sectional view of sectioning along a J-J line shown in FIG. 19.
List of reference numerals: 10-electrode plate assembly; 100-electrode plate; 110-current collector; 120-first active material layer; 130-second active material layer; 131-hollowed region; 140-first through-hole; 200-tab; 210-main body; 211-second through-hole; 220-connecting portion; 230-constraining portion; 240-riveting portion; 300-conductive layer; 500-electrode plate web.

### DETAILED DESCRIPTION OF EMBODIMENTS

To make the objectives, technical solutions, and advantages of some embodiments of this application clearer, the following gives a clear and complete description of the technical solutions in some embodiments of this application with reference to the drawings in some embodiments of this application. Apparently, the described embodiments are merely a part of but not all of the embodiments of this application. Generally, the components of some embodiments of this application, which are described and illustrated in the drawings hereto, may be arranged and designed in a variety of different configurations.

Therefore, the following detailed description of some embodiments of this application provided with reference to the drawings is not intended to limit the scope of this application as claimed, but merely represents selected embodiments of this application. All other embodiments derived by a person of ordinary skill in the art based on the embodiments of this application without making any creative efforts still fall within the protection scope of this application.

It is hereby noted that similar reference numerals and letters indicate similar items in the following drawings. Therefore, once an item is defined in one drawing, the item does not need to be further defined or construed in subsequent drawings. Understandably, in the description of some embodiments of this application, a directional or positional relationship indicated by the terms such as "center", "up", "down", "left", "right", "vertical", "horizontal", "in", or "out" is a directional or positional relationship based on the illustration in the drawings, or a directional or positional relationship exhibited when a product hereof is typically mounted, or a directional or positional relationship typically understood by a person skilled in the art, and is merely intended for ease or brevity of describing this application, but does not indicate or imply that the indicated device or component is necessarily arranged in the specified direction or position or constructed or operated in the specified direction or position. Therefore, such terms are not to be understood as a limitation on this application.

In addition, the terms "first", "second", "third", and so on are merely used for differentiated description, but not to be understood as indicating or implying order of precedence.

In the description of some embodiments of this application, it is hereby noted that, unless otherwise expressly specified and qualified, the terms "dispose", "mount", "concatenate", and "connect" are generic in a broad sense, for example, mean a fixed connection, a detachable connection, or an integrated connection; mean a mechanical connection or electrical connection; mean a direct connection or indirect connection implemented through an intermediary; or mean internal communication between two components. A person of ordinary skill in the art can understand the specific meanings of the terms in this application according to the context.

Currently, the market trend shows that electrochemical devices are applied more extensively. The electrochemical devices have been widely applied to electric transportation such as electric bicycles, electric motorcycles, and electric vehicles, and to many other fields such as electric tools, unmanned aerial vehicles, and energy storage devices. The market demand for electrochemical devices keeps soaring with the increase of the application fields of the electrochemical devices.

The electrochemical devices include an electrode assembly. The electrode assembly is primarily formed by winding or stacking a positive electrode plate and negative electrode plate assembly. The manufacturing cost of the electrode plate assembly is of great significance to the cost of the electrochemical device. However, currently, the manufacturing cost of the electrode plate assembly is relatively high.

In the related art, a tab needs to be welded to an electrode plate during manufacturing of an electrode plate assembly. On the one hand, the welding of the tab to the electrode plate is costly, and is prone to cause welding defects (such as gas cavities, slag, incomplete penetration, incomplete fusion, cracks, dents, undercuts, and weld overlap). On the other hand, because the electrode plate includes an active material layer and a current collector and the tab needs to be welded to the current collector, if the welding process is employed, a part of the current collector needs to be exposed in order to implement welding between the current collector and the tab. In the related art, generally, the current collector is coated with the active material layer continuously first, and then a part of the active material layer is removed to expose a part of the current collector. Consequently, more production steps are added, and the production cost is increased.

Based on the above considerations, in order to alleviate the problem of high manufacturing cost of the electrode plate assembly in the related art, an embodiment of this application provides an electrode plate assembly. The electrode plate assembly includes an electrode plate and a tab. A first through-hole is created on the electrode plate. The first through-hole penetrates the electrode plate along a thickness direction of the electrode plate. The tab includes a main body, a connecting portion, and a constraining portion. Along the thickness direction, the main body and the constraining portion are located on two sides of the electrode plate respectively. The connecting portion runs through the first through-hole and connects the main body and the constraining portion. The electrode plate includes a current collector and a first active material layer. Along the thickness direction, the first active material layer is disposed on one side of the current collector. The current collector and the first active material layer are located between the main body and the constraining portion. The tab is electrically connected to the current collector.

The main body of the tab can abut against the electrode plate, thereby restricting the connecting portion from being detached from the first through-hole in a direction directed from the main body to the constraining portion. The constraining portion can abut against the electrode plate, thereby restricting the connecting portion from being detached from the first through-hole in a direction directed from the constraining portion to the main body. In this way, the tab can be stably connected to the electrode plate, without a need to weld the tab to the electrode plate, thereby avoiding welding defects and alleviating the problem of the high cost caused by the welding. Along the thickness direction, the first active material layer is disposed between the main body and the current collector, or the first active material layer is disposed between the constraining portion and the current collector. In this way, during manufacturing of an electrode plate, the electrode plate can be coated continuously, without a need to remove the first active material layer between the main body and the current collector or between the constraining portion and the current collector, thereby reducing production steps, reducing production cost.

The electrode plate assembly disclosed herein can be configured to manufacture an electrochemical device. The electrochemical device is applicable to, but is not limited to use in, an electrical device such as an electric bicycle, an electric tool, an unmanned aerial vehicle, and an energy storage device. The electrochemical device provided herein may be used as a power supply system of the electrical device to reduce the cost of the electrical device.

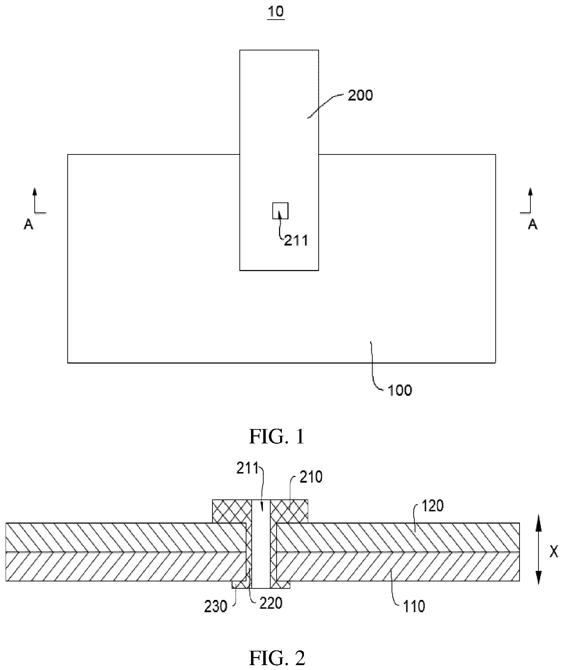

An embodiment of this application provides an electrical device that uses an electrochemical device as a power supply. The electrical device may be, but is not limited to, an electronic device, an electric tool, an electric means of transport, an unmanned aerial vehicle, and an energy storage device. The electronic device may be a mobile phone, a tablet computer, a laptop computer, or the like. The electric tool may be an electric drill, an electric chainsaw, or the like. The electric means of transport may be an electric vehicle, an electric motorcycle, an electric bicycles, or the like. Referring to FIG. 1 and FIG. 2, FIG. 1 is a schematic top view of an electrode plate assembly 10 according to some embodiments of this application. FIG. 2 is a cross-sectional view of sectioning along an A-A line shown in FIG. 1. An embodiment of this application provides an electrode plate assembly 10. The electrode plate assembly 10 includes an electrode plate 100 and a tab 200. A first through-hole 140 is created on the electrode plate 100. The first through-hole 140 penetrates the electrode plate 100 along a thickness direction of the electrode plate 100. The tab 200 includes a main body 210, a connecting portion 220, and a constraining portion 230. Along the thickness direction, the main body 210 and the constraining portion 230 are located on two sides of the electrode plate 100 respectively. The connecting portion 220 runs through the first through-hole 140 and connects the main body 210 and the constraining portion 230. The electrode plate 100 includes a current collector 110 and a first active material layer 120. Along the thickness direction, the first active material layer 120 is disposed on one side of the current collector 110. The current collector 110 and the first active material layer 120 are located between the main body 210 and the constraining portion 230. The tab 200 is electrically connected to the current collector 110.

Referring to FIG. 2, the thickness direction of the electrode plate 100 may be the direction X shown in FIG. 2.

The electrode plate 100 includes a current collector 110 and a first active material layer 120 disposed on a surface of the current collector 110. Along the thickness direction, the first active material layer 120 is located on one side of the current collector 110. In other words, along the thickness direction, the first active material layer 120 and the current collector 110 are stacked up. During manufacturing, the first active material layer 120 may be formed by applying an active material onto the surface of the current collector 110.

Electrode plate assemblies 10 are categorized into a positive electrode plate assembly and a negative electrode plate group. For a positive electrode plate assembly, the current collector 110 may be made of aluminum, and the first active material layer 120 may be made of lithium cobalt oxide, lithium iron phosphate, a ternary material (such as NCM), lithium manganese oxide, or another material. For a negative electrode plate assembly, the current collector 110 may be made of copper, and the first active material layer 120 may be made of carbon, silicon, or another material.

The tab 200 is a conductive component configured to conduct an electrical current out of the electrode plate 100. The tab 200 may be connected to one side of the electrode plate 100 along a width direction.

The first through-hole 140 is a hole structure created on the electrode plate 100. Along the thickness direction of the electrode plate 100, the first through-hole 140 penetrates the current collector 110 and the first active material layer 120. The shape of the first through-hole 140 may be circular, rectangular, pentagonal, hexagonal, or the like.

The main body 210 is a main part of the tab 200 for implementing the functions of the tab. The main body 210 is configured to be connected to another output component. Other output components may be a current collecting plate, an electrode terminal, or the like.

The constraining portion 230 is disposed opposite to the main body 210 along the thickness direction. Along the thickness direction, the current collector 110 and the first active material layer 120 are located between the main body 210 and the constraining portion 230.

The connecting portion 220 is at least partially located in the first through-hole 140, and connects the main body 210 and the constraining portion 230. The main body 210, the connecting portion 220, and the constraining portion 230 coordinate together to connect and constrain the tab 200 to the electrode plate 100.

The main body 210 of the tab 200 can abut against the electrode plate 100, thereby restricting the connecting portion 220 from being detached from the first through-hole 140 in a direction directed from the main body 210 to the constraining portion 230. The constraining portion 230 can abut against the electrode plate 100, thereby restricting the connecting portion 220 from being detached from the first through-hole 140 in a direction directed from the constraining portion 230 to the main body 210. In this way, the tab 200 can be stably connected to the electrode plate 100, without a need to weld the tab 200 to the electrode plate 100, thereby avoiding welding defects and alleviating the problem of the high cost caused by the welding. Along the thickness direction, the first active material layer 120 is disposed between the main body 210 and the current collector 110, or the first active material layer 120 is disposed between the constraining portion 230 and the current collector 110. In this way, during manufacturing of an electrode plate 100, the electrode plate can be coated continuously, without a need to remove the first active material layer 120 between the main body 210 and the current collector 110 or between the constraining portion 230 and the current collector 110, thereby reducing production steps, reducing production cost.

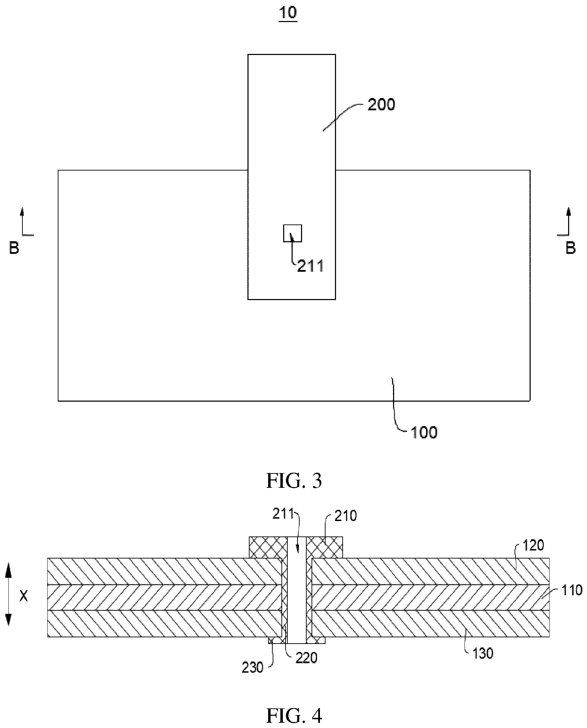

Referring to FIG. 3 and FIG. 4, FIG. 3 is a schematic top view of an electrode plate assembly 10 according to some other embodiments of this application. FIG. 4 is a cross-sectional view of sectioning along a B-B line shown in FIG. 3. In some other embodiments, the electrode plate 100 further includes a second active material layer 130. Along the thickness direction, the second active material layer 130 is disposed on one side of the current collector 110, the side being oriented away from the first active material layer 120. The current collector 110, the first active material layer 120, and the second active material layer 130 are all located between the main body 210 and the constraining portion 230. Along the thickness direction, the main body 210 and the constraining portion 230 are in contact with the first active material layer 120 and the second active material layer 130, respectively.

Along the thickness direction, the first active material layer 120 and the second active material layer 130 are located on two sides of the current collector 110, respectively. The second active material layer 130 may be made of the same material as the first active material layer 120. During manufacturing, the first active material layer 120 and the second active material layer 130 are formed by applying an active material on the two surfaces of the current collector 110 in the thickness direction.

Along the thickness direction, the current collector 110, the first active material layer 120, and the second active material layer 130 are all located between the main body 210 and the constraining portion 230. The first active material layer 120 is located between the main body 210 and the current collector 110. The second active material layer 130 is located between the constraining portion 230 and the current collector 110. The main body 210 is in contact with the first active material layer 120, and an interaction force may be exerted between the main body 210 and the first active material layer 120 or not. The constraining portion 230 is in contact with the second active material layer 130, and an interaction force may be exerted between the constraining portion 230 and the second active material layer 130 or not.

Along the thickness direction, the first active material layer 120 is disposed between the main body 210 and the current collector 110, and the second active material layer 130 is disposed between the constraining portion 230 and the current collector 110.

During manufacturing of an electrode plate 100, the electrode plate can be coated continuously, without a need to remove the first active material layer 120 between the main body 210 and the current collector 110 or the second active material layer 130 between the constraining portion 230 and the current collector 110, thereby reducing production steps, and reducing production cost. In addition, with the main body 210 being in contact with the first active material layer 120, the main body 210 can prevent the electrode plate 100 from moving in a direction directed from the main body 210 to the constraining portion 230. With the constraining portion 230 being in contact with the second active material layer 130, the constraining portion 230 can prevent the electrode plate 100 from moving in a direction directed from the constraining portion 230 to the main body 210. The coordination between the main body 210 and the constraining portion 230 can prevent the electrode plate 100 from wobbling in the thickness direction, so that the electrochemical device prepared from the electrode plate assembly 10 is more stable and reliable.

In some embodiments, the electrode plate 100 includes just the current collector 110 and the first active material layer 120. During manufacturing, an active material is applied onto a single side of the current collector 110 to form the first active material layer 120.

In some embodiments, along the thickness direction, one of the main body 210 or the constraining portion 230 presses against the current collector 110, and the other of the main body 210 or the constraining portion 230 presses against the first active material layer 120.

"Along the thickness direction, one of the main body 210 or the constraining portion 230 presses against the current collector 110, and the other of the main body 210 or the constraining portion 230 presses against the first active material layer 120" may mean that the main body 210 presses against the current collector 110, and the constraining portion 230 presses against the first active material layer 120; or, the main body 210 presses against the first active material layer 120, and the constraining portion 230 presses against the current collector 110.

"Pressing against" means that one component is in direct or indirect contact with another component, and an interaction force may be exerted between the two components or not. For example, "the main body 210 presses against the current collector 110" means that the main body 210 is in direct or indirect contact with the current collector 110, and an interaction force may be exerted between the main body 210 and the current collector 110 or not.

The main body 210 presses against one of the current collector 110 or the first active material layer 120, thereby preventing the electrode plate 100 from moving in a direction directed from the main body 210 to the constraining portion 230. The constraining portion 230 presses against the other of the current collector 110 or the first active material layer 120, thereby preventing the electrode plate 100 from moving in a direction directed from the constraining portion 230 to the main body 210. The coordination between the main body 210 and the constraining portion 230 can prevent the electrode plate 100 from wobbling in the thickness direction, so that the electrochemical device prepared from the electrode plate assembly 10 is more stable and reliable.

In some embodiments, the electrode plate 100 further includes a second active material layer 130. Along the thickness direction, the second active material layer 130 is disposed on one side of the current collector 110, the side being oriented away from the first active material layer 120. The second active material layer 130 includes a hollowed region 131 exposing the current collector 110. One of the main body 210 or the constraining portion 230 presses against the first active material layer 120, and the other of the main body 210 or the constraining portion 230 is located in the hollowed region 131 and presses against the current collector 110.

The hollowed region 131 is a hollowed part formed on the second active material layer 130. The current collector 110 can be observed from the hollowed region 131. The hollowed region 131 may be formed by creating a groove or a notch on the second active material layer 130.

The other of the main body 210 or the constraining portion 230 is located in the hollowed region 131, so that the other of the main body 210 or the constraining portion 230 can press against the current collector 110. Along a direction directed from the current collector 110 to the second active material layer 130, the other of the main body 210 or the constraining portion 230 may be disposed without protruding from the second active material layer 130, or may protrude from the second active material layer 130. When the other of the main body 210 or the constraining portion 230 does not protrude from the second active material layer 130, the thickness of the other of the main body 210 or the constraining portion 230 is less than or equal to the thickness of the second active material layer 130. When the other of the main body 210 or the constraining portion 230 protrudes from the second active material layer 130, the thickness of the other of the main body 210 or the constraining portion 230 is greater than the thickness of the second active material layer 130.

By disposing the other of the main body 210 or the constraining portion 230 in the hollowed region 131, the active material layer is absent between the other of the main body 210 or the constraining portion 230 and the current collector 110 along the thickness direction. Along a direction directed from the current collector 110 to the second active material layer 130, the other of the main body 210 or the constraining portion 230 may be disposed without protruding from the second active material layer 130, or the other of the main body 210 or the constraining portion 230 may protrude from the second active material layer 130 by just a small margin of height, thereby reducing the dimension of the electrode plate assembly 10 in the thickness direction, and increasing the energy density of the electrochemical device prepared from the electrode plate assembly 10.

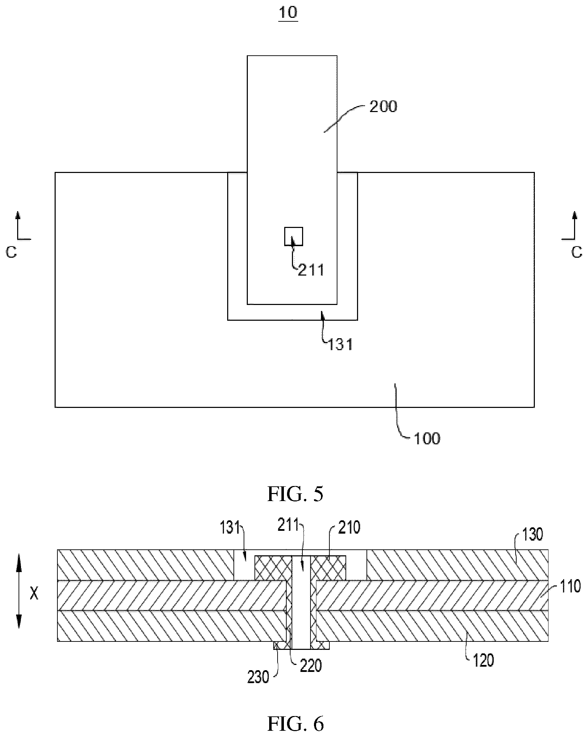

Referring to FIG. 5 and FIG. 6, FIG. 5 is a schematic top view of an electrode plate assembly 10 according to still some other embodiments of this application. FIG. 6 is a cross-sectional view of sectioning along a C-C line shown in FIG. 5. In still some other embodiments, the electrode plate 100 includes a second active material layer 130. Along the thickness direction, the second active material layer 130 is disposed on one side of the current collector 110, the side being oriented away from the first active material layer 120. The second active material layer 130 includes a hollowed region 131 exposing the current collector 110. The main body 210 is located in the hollowed region 131. The main body 210 presses against the current collector 110, and the constraining portion 230 presses against the first active material layer 120.

The hollowed region 131 is a hollowed part formed on the second active material layer 130. The current collector 110 can be observed from the hollowed region 131. The hollowed region 131 may be formed by creating a groove or a notch on the second active material layer 130.

The main body 210 is located in the hollowed region 131, so that the main body 210 can press against the current collector 110. Along a direction directed from the current collector 110 to the second active material layer 130, the main body 210 may be disposed without protruding from the second active material layer 130, or may protrude from the second active material layer 130. When the main body 210 does not protrude from the second active material layer 130, the thickness of the main body 210 is less than or equal to the thickness of the second active material layer 130. When the main body 210 protrudes from the second active material layer 130, the thickness of the main body 210 is greater than the thickness of the second active material layer 130.

By disposing the main body 210 in the hollowed region 131, the active material layer is absent between the main body 210 and the current collector 110 along the thickness direction. Along a direction directed from the current collector 110 to the second active material layer 130, the main body 210 may be disposed without protruding from the second active material layer 130, or the main body 210 may protrude from the second active material layer 130 by just a small margin of height, thereby reducing the dimension of the electrode plate assembly 10 in the thickness direction, and increasing the energy density of the electrochemical device prepared from the electrode plate assembly 10.

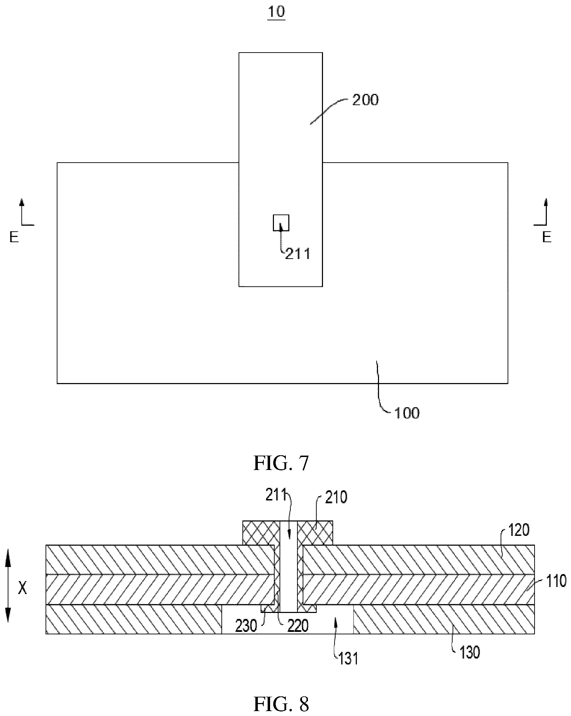

Referring to FIG. 7 and FIG. 8, FIG. 7 is a schematic top view of an electrode plate assembly 10 according to yet some other embodiments of this application. FIG. 8 is a cross-sectional view of sectioning along an E-E line shown in FIG. 7. In yet some other embodiments, the electrode plate 100 includes a second active material layer 130. Along the thickness direction, the second active material layer 130 is disposed on one side of the current collector 110, the side being oriented away from the first active material layer 120. The second active material layer 130 includes a hollowed region 131 exposing the current collector 110. The constraining portion 230 is located in the hollowed region 131. The constraining portion 230 presses against the current collector 110, and the main body 210 presses against the first active material layer 120.

The constraining portion 230 is located in the hollowed region 131, so that the constraining portion 230 can press against the current collector 110. Along a direction directed from the current collector 110 to the second active material layer 130, the constraining portion 230 may be disposed without protruding from the second active material layer 130, or may protrude from the second active material layer 130. When the constraining portion 230 does not protrude from the second active material layer 130, the thickness of the constraining portion 230 is less than or equal to the thickness of the second active material layer 130. When the constraining portion 230 protrudes from the second active material layer 130, the thickness of the constraining portion 230 is greater than the thickness of the second active material layer 130.

By disposing the constraining portion 230 in the hollowed region 131, the active material layer is absent between the constraining portion 230 and the current collector 110 along the thickness direction. Along a direction directed from the current collector 110 to the second active material layer 130, the constraining portion 230 may be disposed without protruding from the second active material layer 130, or the constraining portion 230 may protrude from the second active material layer 130 by just a small margin of height, thereby reducing the dimension of the electrode plate assembly 10 in the thickness direction, and increasing the energy density of the electrochemical device prepared from the electrode plate assembly 10.

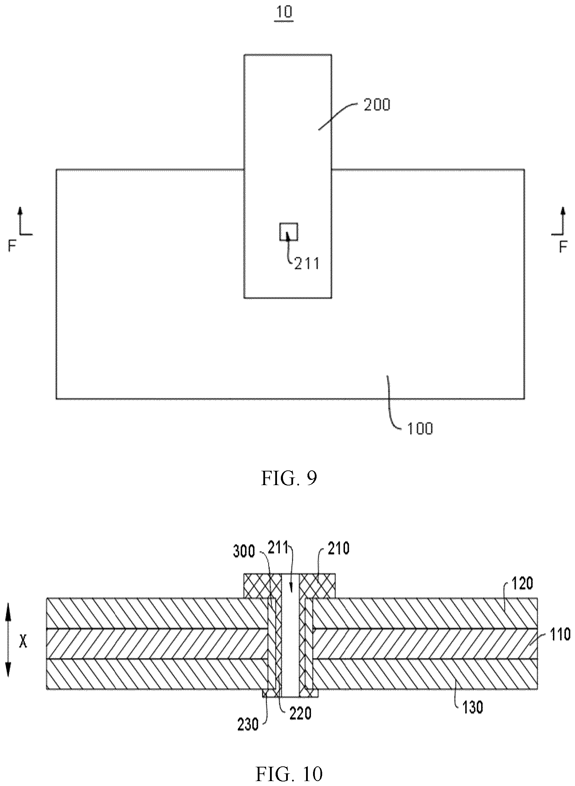

Referring to FIG. 9 and FIG. 10, FIG. 9 is a schematic top view of an electrode plate assembly 10 according to still some other embodiments of this application. FIG. 10 is a cross-sectional view of sectioning along an F-F line shown in FIG. 9. In some embodiments, a conductive layer 300 is disposed between the connecting portion 220 and the hole wall of the first through-hole 140.

The conductive layer 300 is a structure of electrical conductivity. The conductive layer 300 is located between the connecting portion 220 and the hole wall of the first through-hole 140. The conductive layer 300 may fully cover the hole wall of the first through-hole 140 to ensure a high flow capacity.

With the conductive layer 300 disposed between the connecting portion 220 and the hole wall of the first through-hole 140, the flow capacity at the junction between the connecting portion 220 and the current collector 110 is increased.

In some embodiments, the conductive layer 300 bonds the connecting portion 220 to the hole wall.

The conductive layer 300 is sticky and can bond the connecting portion 220 to the hole wall. The conductive layer 300 may be an adhesive layer formed by drying conductive adhesive.

The conductive layer 300 is sticky. The connecting portion 220 is bonded to the hole wall by the conductive layer 300. On the one hand, this reduces the risk that the connecting portion 220 is detached from the hole wall, and makes the tab 200 not prone to wobble, thereby further improving the stability of connection between the tab 200 and the electrode plate 100. On the other hand, the connecting portion 220 is not prone to upwarp, so that the current can flow to the connecting portion 220 through the current collector 110 and the conductive layer 300, thereby ensuring a sufficient flow capacity. In some embodiments, the constraining portion 230 is a flange structure disposed at one end of the connecting portion 220, the end being away from the main body 210.

With the constraining portion 230 being a flange structure, the tab 200 can be connected to the electrode plate 100 by riveting during manufacturing, thereby being simple, convenient, and cost-effective.

Referring to FIG. 9 and FIG. 10, in some embodiments, a second through-hole 211 is created on the main body 210. The second through-hole 211 penetrates the connecting portion 220 along the thickness direction.

During manufacturing, a first through-hole 140 may be created on the electrode plate 100 first, and then the tab 200 is placed at the first through-hole 140 to cover the first through-hole 140. At a position corresponding to the first through-hole 140, the tab 200 is punched by using a punching pin, so as to form a second through-hole 211. A part of the punched material forms a connecting portion 220, and another part of the punched material is flanged to form a constraining portion 230.

In some embodiments, a shape of the connecting portion 220 matches a shape of the first through-hole 140. An outer peripheral surface of the connecting portion 220 snugly fits a hole wall face of the first through-hole 140.

When the first through-hole 140 is a circular hole, the connecting portion 220 may be in the shape of a cylinder or a hollowed cylinder. When the first through-hole 140 is a square hole, the connecting portion 220 may be in the shape of a prism or a square column. In this way, the shape of the connecting portion 220 matches the shape of the first through-hole 140, so that the outer peripheral surface of the connecting portion 220 fits the hole wall face of the first through-hole 140 as snugly as possible, thereby increasing the contact area between the current collector 110 and the tab 200.

By matching the shape of the connecting portion 220 to the shape of the first through-hole 140 and making the outer peripheral surface of the connecting portion 220 snugly fit the hole wall face of the first through-hole 140, this application can restrict the connecting portion 220 from moving along a direction perpendicular to the thickness direction within the first through-hole 140 on the one hand. In this way, the tab 200 is constrained from moving relative to the electrode plate 100 along the direction perpendicular to the thickness direction, and the tab 200 is not prone to wobble, thereby further improving the stability of connection between the tab 200 and the electrode plate 100. On the other hand, the current can flow from the current collector 110 to the connecting portion 220, thereby increasing the flow capacity.

Referring to FIG. 9 and FIG. 10, in some embodiments, the first through-hole 140 is a square hole.

The cross-section of the first through-hole 140 along a direction perpendicular to the thickness direction may be a rectangle or a square.

With the first through-hole 140 being a square hole, on the one hand, the square hole is large in area, thereby increasing the contact area between the tab 200 and the electrode plate 100, and increasing the flow capacity. On the other hand, interference is not prone to occur when a constraining portion 230 is formed by flanging.

Referring to FIG. 9 and FIG. 10, in some embodiments, a side length of the first through-hole 140 is L, satisfying: 0.8 mm ≤ L ≤ 2 mm.

L represents the side length of the first through-hole 140. The side length L of the first through-hole 140 may be 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, or the like.

By limiting the side length of the first through-hole 140 to a range of 0.8 mm to 2 mm, the size of the first through-hole 140 is moderate, thereby not only ensuring stability of connection between the tab 200 and the electrode plate 100, but also increasing the number of first through-holes 140 that can be created. In this way, the tab 200 is connected to the electrode plate 100 at the position of each first through-hole 140, thereby improving the stability of connection between the tab 200 and the electrode plate 100. When L is less than 0.8 mm, the first through-hole 140 is overly small, just a small part of the connecting portion 220 can be accommodated in the first through-hole 140, and the connecting portion 220 is prone to break, thereby resulting in low stability of connection between the tab 200 and the electrode plate 100. When L is greater than 2 mm, the first through-hole 140 is overly large, and just a small number of first through-holes 140 can be created, thereby also impairing the stability of connection between the tab 200 and the electrode plate 100.

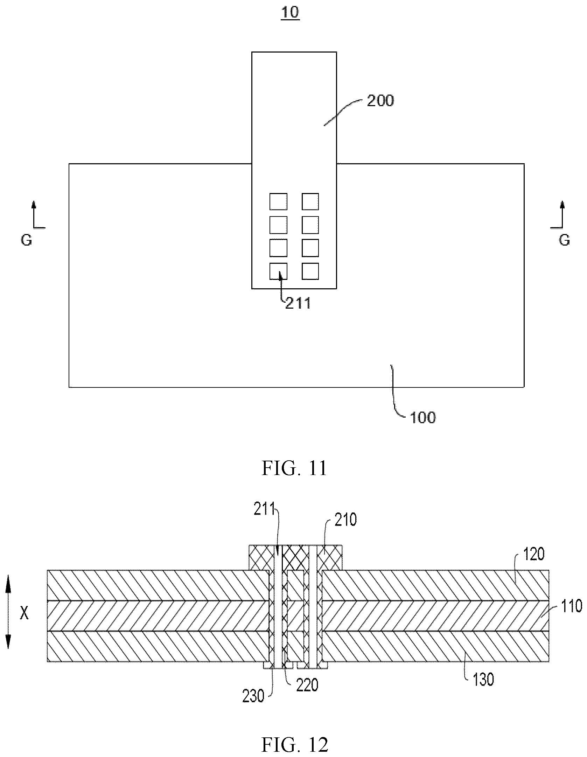

Referring to FIG. 11 and FIG. 12, FIG. 11 is a schematic top view of an electrode plate assembly 10 according to yet some other embodiments of this application. FIG. 12 is a cross-sectional view of sectioning along a G-G line shown in FIG. 11. In yet some other embodiments, a plurality of the connecting portions 220 are disposed on the main body 210, and the constraining portions 230 and the first through-holes 140 correspond to the connecting portions 220 one to one.

A plurality of first through-holes 140 are created on the electrode plate 100. One connection portion 220 is accommodated in each first through-hole 140 correspondingly. One constraining portion 230 is formed correspondingly at one end of each connecting portion 220, the end being oriented away from the main body 210 along the thickness direction.

"A plurality of the connecting portions 220 are disposed on the main body 210, and the constraining portions 230 and the first through-holes 140 correspond to the connecting portions 220 one to one" may be understood as: the connecting portions 220 and the constraining portions 230 together form a connecting structure, a plurality of connecting structures are disposed on the tab 200, and a plurality of first through-holes 140 are created on the electrode plate 100, and the connecting structures correspond to the first through-holes 140 one to one.

A plurality of connecting portions 220 are disposed. Corresponding to each connecting portion 220, one constraining portion 230 and one first through-hole 140 are disposed. On the one hand, this can improve the stability of connection between the tab 200 and the electrode plate 100. On the other hand, this increases the contact area between the current collector 110 and the tab 200, thereby increasing the flow capacity.

An embodiment of this application further provides an electrode assembly. The electrode assembly includes a separator, a first electrode plate assembly, and a second electrode plate assembly. The polarity of the second electrode plate assembly is opposite to the polarity of the first electrode plate assembly. At least one of the first electrode plate assembly or the second electrode plate assembly is the electrode plate assembly 10 disclosed above. The first electrode plate assembly, the separator, and the second electrode plate assembly are wound or stacked to form the electrode assembly.

The separator may be made of a material such as PP (polypropylene, polypropylene) or PE (polyethylene, polyethylene).

The first electrode plate assembly is of an opposite polarity to the second electrode plate assembly. When the first electrode plate is a positive electrode plate assembly, the second electrode plate assembly is a negative electrode plate assembly. When the first electrode plate assembly is a negative electrode plate, the second electrode plate assembly is a positive electrode plate assembly. The first electrode plate assembly, the separator, and the second electrode plate assembly are wound or stacked to form the electrode assembly.

In some embodiments, the first electrode plate assembly includes N layers of first electrode plates, and tabs of the first electrode plate assembly are disposed on the first electrode plates on the 2^{nd} layer to the (N-1)^{th} layer respectively, where N is an integer and N ≥ 2; and/or, the second electrode plate assembly includes P layers of second electrode plates, the second electrode plates are of an opposite polarity to the first electrode plates, and tabs of the second electrode plate assembly are disposed on the second electrode plates on the 2^{nd} layer to the (P-1)^{th} layer respectively, where P is an integer and P ≥ 2.

The polarity of the first electrode plates is opposite to the polarity of the second electrode plates. When the first electrode plates are positive electrode plates, the second electrode plates are negative electrode plates.

For a jelly-roll electrode assembly, one coil of the first electrode plate is considered as one layer. For example, the first electrode plate is wound for 3 coils, and the tab of the first electrode plate assembly is disposed on the second coil. For a stacked-type electrode assembly, from bottom to top or from top to bottom, each first electrode plate is considered as one layer. For example, if the stacked-type electrode assembly includes 3 layers of first electrode plates, the tab of the first electrode assembly needs to be disposed on the first electrode plate on the second layer.

Similarly, for a jelly-roll electrode assembly, one coil of the second electrode plate is considered as one layer. For example, the second electrode plate is wound for 3 coils, and the tab of the second electrode plate assembly is disposed on the second coil. For a stacked-type electrode assembly, from bottom to top or from top to bottom, each second electrode plate is considered as one layer. For example, if the stacked-type electrode assembly includes 3 layers of second electrode plates, the tab of the second electrode assembly needs to be disposed on the second electrode plate on the second layer.

The tabs of the first electrode plate assembly are not disposed on the innermost first electrode plate or the outermost first electrode plate, thereby shortening the transport path of electrons and reducing the internal resistance of the battery cell. Similarly, the tabs of the second electrode plate assembly are not disposed on the innermost second electrode plate or the outermost second electrode plate, thereby shortening the transport path of electrons and reducing the internal resistance of the battery cell.

An embodiment of this application further provides an electrochemical device. The electrochemical device includes a housing and the foregoing electrode assembly. The electrode assembly is accommodated in the housing.

An embodiment of this application further provides an electrical device. The electrical device includes the foregoing electrochemical device.

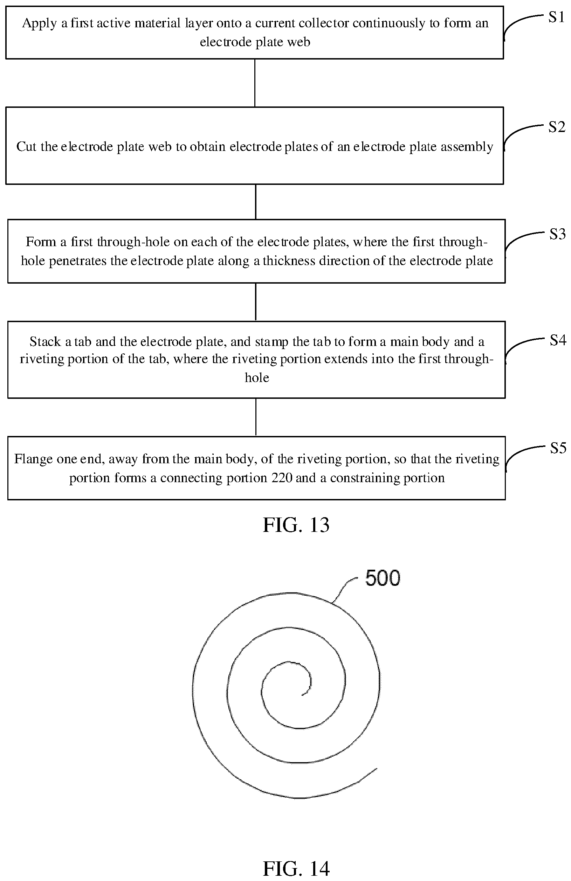

Referring to FIG. 13, FIG. 13 is a schematic block diagram of an electrode plate assembly 10 manufacturing method according to some embodiments of this application. An embodiment of this application further provides an electrode plate assembly 10 manufacturing method. The manufacturing method includes:
Step S1: Applying a first active material layer 120 onto a current collector 110 continuously to form an electrode plate web 500.
Step S2: Cutting the electrode plate web 500 to obtain electrode plates 100 of an electrode plate assembly 10.
Step S3: Forming a first through-hole 140 on each of the electrode plates 100, where the first through-hole 140 penetrates the electrode plate 100 along a thickness direction of the electrode plate 100.
Step S4: Stacking a tab 200 and the electrode plate 100, and stamping the tab 200 to form a main body 210 and a riveting portion 240 of the tab 200, where the riveting portion extends into the first through-hole 140.
Step S5: Flanging one end, away from the main body 210, of the riveting portion 240, so that the riveting portion 240 forms a connecting portion 220 and a constraining portion 230.

Along the thickness direction, the connecting portion 220 runs through the first through-hole 140 and connects the main body 210 and the constraining portion 230. The current collector 110 and the first active material layer 120 are located between the main body 210 and the constraining portion 230.

Referring to FIG. 14, FIG. 14 is a schematic structural diagram of an electrode plate web 500 according to some embodiments of this application. In step S 1, the first active material layer 120 is applied onto the current collector 110 continuously, without a need to reserve a blank foil region. In addition, the active material is continuously applied onto the other side of the current collector 110, the other side being oriented away from the first active material layer 120, so as to form a second active material layer 130. After being coated and oven-dried, the current collector coated with the active material layers are wound and stored to form an electrode plate web 500.

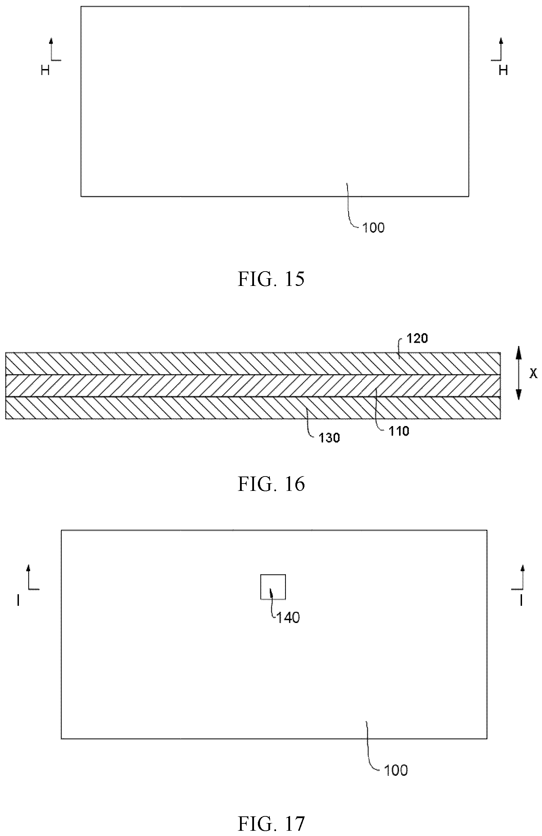

Referring to FIG. 15 and FIG. 16, FIG. 15 is a schematic top view of an electrode plate 100 according to some embodiments of this application. FIG. 16 is a cross-sectional view of sectioning along an H-H line shown in FIG. 15. Because the electrode plate web 500 is relatively large in size, the electrode plate web 500 needs to be cut to form electrode plates 100 that meet the design requirements. As shown in FIG. 15 and FIG. 16, along the thickness direction, the first active material layer 120 is disposed on one side of the current collector 110. If a second active material layer 130 is formed by applying the active material continuously onto one side of the current collector 110, the side being oriented away from the first active material layer 120, then the first active material layer 120 and the second active material layer 130 are located on two sides of the current collector 110, respectively.

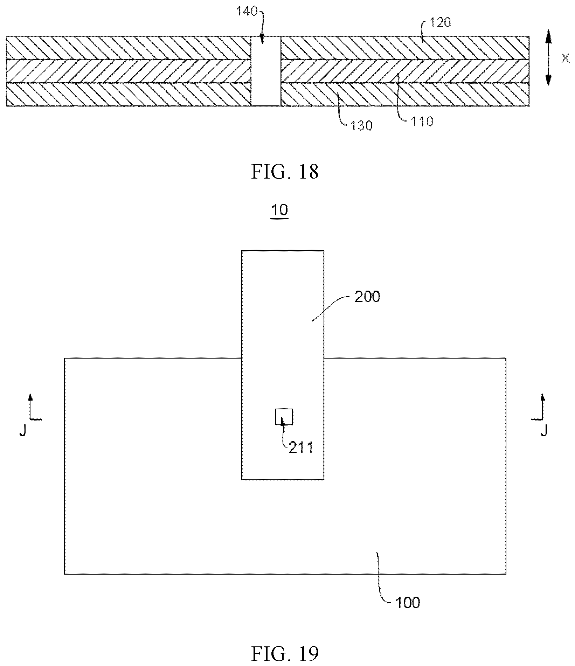

Referring to FIG. 17 and FIG. 18, FIG. 17 is a schematic top view of an electrode plate 100 on which a first through-hole 140 is formed according to some embodiments of this application. FIG. 18 is a cross-sectional view of sectioning along an I-I line shown in FIG. 17. In step S3, the first through-hole 140 may be formed on the electrode plate 100 by punching or drilling. Along the thickness direction, the first through-hole 140 penetrates the current collector 110 and the first active material layer 120. If a second active material layer 130 is formed by applying the active material continuously onto one side of the current collector 110, the side being oriented away from the first active material layer 120, then the first through-hole 140 further penetrates the second active material layer 130.

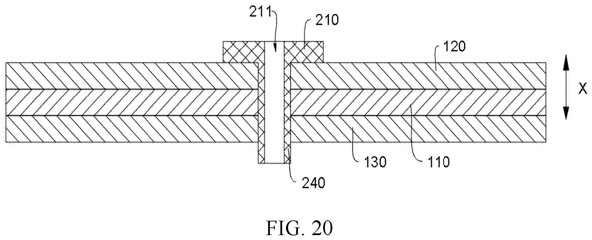

Referring to FIG. 19 and FIG. 20, FIG. 19 is a schematic top view of a riveting portion 240 formed by stamping a tab 200 according to some embodiments of this application. FIG. 20 is a cross-sectional view of sectioning along a J-J line shown in FIG. 19. In step S4, when the tab 200 and the electrode plate 100 are stacked up, a part of the tab 200 overlaps the electrode plate 100, and another part of the tab 200 extends out of the electrode plate 100. It is hereby noted that the part of the tab 200, which overlaps the electrode plate 100, needs to cover the first through-hole 140. During stamping of the tab 200, the stamping position corresponds to the position of the first through-hole 140. In this way, a part of the tab 200 is stamped into the first through-hole 140 to form a riveting portion 240.

Still referring to FIG. 3 and FIG. 4, in step S5, one end, away from the main body 210, of the riveting portion 240 is flanged to form a connecting portion 220 and a constraining portion 230. Along the thickness direction, the connecting portion 220 runs through the first through-hole 140 and connects the main body 210 and the constraining portion 230. The current collector 110 and the first active material layer 120 are located between the main body 210 and the constraining portion 230.

When the electrode plate assembly 10 is manufactured by this manufacturing method, no welding is required, thereby alleviating the problem of high cost caused by the welding. In addition, during manufacturing of an electrode plate 100, the electrode plate can be coated continuously, without a need to remove the first active material layer 120 between the main body 210 and the current collector 110 or between the constraining portion 230 and the current collector 110, thereby reducing production steps, reducing production cost.

What is described above is merely exemplary embodiments of this application, but is not intended to limit this application. To a person skilled in the art, various modifications and variations may be made to this application. Any and all modifications, equivalent replacements, improvements, and the like made without departing from the spirit and principles of this application still fall within the protection scope of this application.

## Claims

1. An electrode plate assembly (10), wherein the electrode plate assembly (10) comprising:
an electrode plate, wherein a first through-hole (140) is provided on the electrode plate (100), and the first through-hole (140) penetrates the electrode plate (100) along a thickness direction of the electrode plate (100);
a tab (200), wherein the tab (200) comprises a main body (210), a connecting portion (220), and a constraining portion (230), and, along the thickness direction, the main body (210) and the constraining portion (230) are located on two opposite sides of the electrode plate respectively, and the connecting portion (220) runs through the first through-hole (140) and connects the main body (210) and the constraining portion (230), wherein
the electrode plate (100) comprises a current collector (110) and a first active material layer (120); along the thickness direction, the first active material layer (120) is disposed on a first side of the current collector (110); the current collector (110) and the first active material layer (120) are located between the main body (210) and the constraining portion (230); and the tab (200) is electrically connected to the current collector (110).

2. The electrode plate assembly (10) according to claim 1, wherein the electrode plate (100) further comprises a second active material layer (130); along the thickness direction, the second active material layer (130) is disposed on a second side of the current collector (110), the second side of the current collector (110) being oriented away from the first active material layer (120);
the current collector (110), the first active material layer (120), and the second active material layer (130) are all located between the main body (210) and the constraining portion (230), and, along the thickness direction, the main body (210) and the constraining portion (230) are in contact with the first active material layer (120) and the second active material layer (130), respectively.

3. The electrode plate assembly (10) according to claim 1, wherein, along the thickness direction, one of the main body (210) or the constraining portion (230) presses against the current collector (110), and the other of the main body (210) or the constraining portion (230) presses against the first active material layer (120).

4. The electrode plate assembly (10) according to claim 3, wherein the electrode plate (100) further comprises a second active material layer (130), and, along the thickness direction, the second active material layer (130) is disposed on one side of the current collector (110), the side being oriented away from the first active material layer (120); and
the second active material layer (130) comprises a hollowed region (131) exposing the current collector (110), one of the main body (210) or the constraining portion (230) presses against the first active material layer (120), and the other of the main body (210) or the constraining portion (230) is located in the hollowed region (131) and presses against the current collector (110).

5. The electrode plate assembly (10) according to claim 1, wherein a conductive layer (300) is disposed between the connecting portion (220) and a hole wall surrounding the first through-hole (140).

6. The electrode plate assembly (10) according to claim 5, wherein that the conductive layer (300) is bonded to the connecting portion (220) and the hole wall.

7. The electrode plate assembly (10) according to claim 1, wherein that the constraining portion (230) is a flange structure disposed at one end of the connecting portion (220), the one end of the connecting portion being away from the main body (210).

8. The electrode plate assembly (10) according to any one of claims 1 to 7, wherein a second through-hole (211) is provided on the main body (210), and the second through-hole (211) penetrates the connecting portion (220) along the thickness direction.

9. The electrode plate assembly (10) according to any one of claims 1 to 7, wherein that a shape of the connecting portion (220) matches a shape of the first through-hole (140), and an outer peripheral surface of the connecting portion (220) snugly fits a hole wall surrounding the first through-hole (140).

10. The electrode plate assembly (10) according to claim 9, wherein the first through-hole (140) is a square shaped hole.

11. The electrode plate assembly (10) according to claim 10, wherein a side length of the first through-hole (140) is L, and 0.8 mm ≤ L ≤ 2 mm.

12. The electrode plate assembly (10) according to any one of claims 1 to 7, wherein a plurality of connecting portions (220) are disposed on the main body (210), and a plurality of constraining portions (230) and a plurality of first through-holes(140) are provided in one to one correspondence to the plurality of connecting portions (220).

13. An electrode assembly, wherein the electrode assembly comprises:
a separator;
a first electrode plate assembly (10); and
a second electrode plate assembly (10), wherein the second electrode plate assembly (10) is of an opposite polarity to the first electrode plate assembly (10), and at least one of the first electrode plate assembly (10) or the second electrode plate assembly (10) is the electrode plate assembly (10) according to any one of claims 1 to 12, wherein
the first electrode plate assembly (10), the separator, and the second electrode plate assembly (10) are wound or stacked to form the electrode assembly.

14. The electrode assembly according to claim 13, wherein the first electrode plate assembly (10) comprises N layers of first electrode plates, and tab (200) of the first electrode plate assembly (10) are disposed on the first electrode plates on a 2^{nd} layer to an (N-1)^{th} layer respectively, wherein N is an integer and N ≥ 2; and/or
the second electrode plate assembly (10) comprises P layers of second electrode plates, the second electrode plates are of an opposite polarity to the first electrode plates, and tabs (200) of the second electrode plate assembly (10) are disposed on the second electrode plates on a 2^{nd} layer to an (P-1)^{th} layer respectively, wherein P is an integer and P ≥ 2.

15. An electrochemical device, comprising:
a housing; and
the electrode assembly according to claim 13 or 14, wherein the electrode assembly is accommodated in the housing.

16. An electrical device, comprising the electrochemical device according to claim 15.

17. A method for manufacturing the electrode plate assembly (10) of claim 1, the method comprising:
Applying the first active material layer (120) onto the current collector (110) continuously to form the electrode plate web (500);
cutting the electrode plate web (500) to obtain electrode plates of an electrode plate assembly (10);
forming a first through-hole (140) on each of the electrode plates, wherein the first through-hole (140) penetrates the electrode plate along a thickness direction of the electrode plate;
stacking a tab (200) and the electrode plate, and stamping the tab (200) to form a main body (210) and a riveting portion (240) of the tab (200), wherein the riveting portion (240) extends into the first through-hole (140); and
flanging one end, away from the main body (210), of the riveting portion (240), so that the riveting portion (240) forms a connecting portion (220) and a constraining portion (230), wherein
along the thickness direction, the connecting portion (220) runs through the first through-hole (140) and connects the main body (210) and the constraining portion (230), and the current collector (110) and the first active material layer (120) are located between the main body (210) and the constraining portion (230).
